# EUROPEAN PATENT SPECIFICATION

(11) **EP 2 524 956 B1**
(45) Date of publication and mention of the grant of the patent: **21.03.2018**
(21) Application number: 11732626.4
(22) Date of filing: 14.01.2011
(51) Int. Cl.: C10G 1/10, C08J 11/12

(54) **METHOD FOR THERMAL TREATMENT OF USED TYRES**
VERFAHREN ZUR WÄRMEBEHANDLUNG ALTER REIFEN
PROCÉDÉ DE TRAITEMENT THERMIQUE DE PNEUMATIQUES USAGÉS

(30) Priority: 15.01.2010 CL 262010
(43) Date of publication of application: 21.11.2012
(73) Proprietor: Napadensky Bauza, Claudio Eduardo, Santiago, Chile CP 8320000 (CL)
(72) Inventor: Napadensky Bauza, Claudio Eduardo, Santiago, Chile CP 8320000 (CL)
(74) Representative: Carpintero Lopez, Francisco
(86) International application number: PCT/CL2011/000004
(87) International publication number: WO 2011/085508

(56) References cited:
- WO-A1-00/11110
- ES-T3- 2 327 858
- GB-A- 2 090 609

## Description

### TECHNICAL FIELD

The invention relates to the thermal treatment field of polymer raw materials, particularly, to the use of tyres and other items of technical rubber.

### BACKGROUND OF THE INVENTION

In the search for effective treatment methods of used tyres special attention is given to the recovering methods of the precursor raw material which comprise the rubber waste.

From US Patent, N°5783046 (published on July 21, 1998, Process and apparatus for the destructive distillation of rubber) it is known a process and apparatus of dry distillation for the destruction of used rubber tyres, with the subsequent separation of the products of pyrolysis into liquid hydrocarbon fraction and solid waste from pyrolysis. During the initial stage of the process the exhaust fumes from an internal combustion engine are used to eliminate the oxygen from a reaction chamber within which is carried out a pyrolysis process to a temperature between 300°C and 600°C. This process is periodic and is developed with the indirect transfer to the raw material of the necessary temperature for the pyrolysis process through a burner for heating by radiation (thermal radiation).

A device for heating by radiation which consists of pipes wherein the hydrocarbon gas exiting from the pyrolysis process is burned.

The disadvantage of the system is that the distillation process is performed within a device functioning in cycles and not continuously.

From US Patent N° 6657095 (published on December 2, 2003-Continuous temperature variance pyrolysis for extracting products from tire chips) it is known a continuous pyrolysis process of crushed used tyres, receiving liquid hydrocarbon fractions and a solid pyrolysis waste. The pyrolysis process is performed within an oil environment, received from the liquid hydrocarbon fractions of thermolysis. The reactor for the pyrolysis is a double drum rotary furnace. The movement of the raw material within the rotary drum is made by means of a rotary screw or worm screw. The installation works with the use of heat of the exhaust fumes La imperfección de esta tecnología se define por el muy complicado sistema de aparatos de proceso y un gran consumo de energía.

The disadvantage in both aforementioned processes is the low energy efficiency and the poor use of exhaust fumes from internal combustion engines.

From international application WO2005102639 (published on November 3, 2005) it is known the thermal treatment method of used tyres and equipment to carry out said method. This method and equipment are chosen as the closest document of the state of the art with respect to the present invention. By means of the mentioned method is carried out the processing of crushed tyres within a rector at a temperature between 550-800°C, in a reducing gases environment, that is, gases which do not contain oxygen. The reducing gases are obtained by means of a preparation equipment of these gases through the combustion of hydrocarbon gases. A heating apparatus is used in this method. At least a part of these gaseous hydrocarbon pyrolysis products exiting the reactor together with the liquid hydrocarbon vapours feed the reducing gas generator and the heating unit. At least a part of the combustion gases exiting the heating unit feed the reducing gas generator and the reactor. The installation of the thermal treatment of used tyres comprises a reactor, a system for collecting the gases formed in the reactor, a reducing-gas generator, connected to the reactor, a system for delivery of the comminuted tyres into the reactor and a receiving means for the pyrolysis solid product. The installation is provided with a heating unit, a means for removing the flue gases and in turn, a system for collecting gases formed in the reactor, being connected to the reducing-gases generator and the heating unit. The collection equipment of combustion gases is connected to the reducing gas generator and the reactor.

The disadvantage of this technology is the low level of vapours of liquid hydrocarbons containing reducing gases which is the result of the combustion of pyrolysis gases during the recycling thereof for generating the reaction medium for the pyrolysis. In addition, another disadvantage of this technology is the high energy consumption to create the necessary gas pressure so as they can feed the reactor.

The basic task for the new invention is to eliminate the above mentioned flaws and to create an effective method for processing used tyres as well as the appropriate equipment for carrying out this process, which allows increasing the efficiency of the process by reducing the energy consumption, increasing the safety of the installation work, improving the quality of received products, increasing the service life thereof and particularly, having a very coherent process with regard to the current environmental policies.

### DESCRIPTION OF THE INVENTION

The aforementioned task is solved through the use of a thermal processing method of used tyres, as disclosed in claim 1. The present invention discloses also a thermal treatment installation as disclosed in claim 11. The method of the present invention discloses a device for preparing hot gases with a cooling of the solid product obtained through the thermolysis within the cooling zone of the reactor, with the use of the thermolysis gases exiting the reactor and which are not recirculated; feeding the reaction zone of the reactor with hot gases flow obtained from the device for preparing hot gas.

The invention is characterized by the following primary and secondary distinctive indications.

To create an oxygen-free environment within the reactor, the exhaust fumes from the internal combustion engine are used, which are supplied to the reactor by two ways; a portion of these gases is supplied to a device for preparing hot gases, they are then mixed with the thermolysis gases in order to be subsequently recirculated. Other portion of the exhaust fumes are entered into the cooling zone of the reactor, these exhaust fumes have previously circulated through the mechanism for feeding the reactor, which are used for the appropriate pre-heating of crushed tyres.

Preferably, the ratio of the weight of the exhaust fumes from the internal combustion engine, used to obtain the oxygen-free gas environment to the weight of the supplied raw material of crushed used tyres is to be selected between 0.4:1 to 0.7:1.

Preferably, the ratio of the weight of the thermolysis gases supplied to the device for preparing hot gases to the weight of the raw material of crushed used tyres is to be selected between 0.30:1 to 0.45: 1

It is desirable to perform the pre-heating of the raw material at temperatures between 140°C to 200°C, preferably, between 150°C to 180°C.

It is necessary to perform the feeding of the exhaust fumes supplied to the feeding mechanism as well as the delivery of the crushed tyres to the reactor at temperatures between 180°C to 200°C.

Preferably, the thermolysis will be performed at temperatures between 400°C to 550°C, most preferably at temperatures between 420°C to 450°C.

It is possible that the thermolysis gases are used for combustion in a mechanism, wherein said mechanism has been manufactured as a heating apparatus.

It is probable that during the use of thermolysis gases, a decomposition (extraction or obtention) of at least one liquid hydrocarbon fraction is produced from said gases within apparatuses for using the thermolysis gases.

In addition, it might be necessary to perform, in a complementary way, a temperature rise and/or an increase of the gas flow exiting the device for preparing hot gas, due to different reasons, with regard to the final requirement of gas and temperature.

Preferably, it is necessary that the exhaust fumes from the internal combustion engine, supplied to the cooling zone of the reactor and that come from the feeding mechanism of crushed tyres to the reactor have temperatures between 50°C to 110°C, most preferably from 60°C to 80°C.

The posed task is solved by using the proposed thermal treatment installation of used tyres which comprises: a reactor with a reaction zone and a cooling zone of the solid thermolysis products; an ejector device for preparing hot gases, connected to the reactor, a mechanism for feeding the crushed used tyres connected to the reactor, which has an inlet and outlet for the gases to be heated, said gases pass through the raw material, mechanism (s) for using thermolysis gases, connected to the outlet of the thermolysis gases of the reactor; the outlet of the device for preparing hot gases connected to the reaction zone of the reactor; and the inlet of the device for preparing the hot gases, connected to the outlet of the thermolysis gases of the reactor.

The invention is characterized by the following main and secondary distinctive indications.

The installation is provided with an internal combustion engine coupled to a device for using mechanical energy wherein the exhaust fumes outlet thereof is connected to the inlet of the ejector device for preparing the hot gases and this outlet is also connected to an inlet of the mechanism for feeding crushed tyres to the reactor. The ejector device for preparing the hot gases allows mixing the thermolysis gases and the exhaust fumes entering the device; the outlet for the gases entering the mechanism for feeding the raw material to the reactor is connected to the discharge zone and to the cooling zone of the solid thermolysis products.

It is also necessary that the outlet of the exhaust fumes from the internal combustion engine is connected to the inlet of the ejector device for preparing the hot gases for the feeding mechanism of raw material to the reactor; the outlet of the gases supplied to the feeding mechanism of raw material to the reactor will be connected to the inlet of an ejector device for preparing hot gases for this device itself.

The exhaust fume outlet from the internal combustion engine will be connected to the inlet of device for preparing hot gases, eventually being able to do it by means of a heat exchanger.

It is desirable that the mechanism for using thermolysis gases is manufactured as a mechanism or apparatus, or device of the heating type (of combined energetic use).

Preferably, the mechanism for using thermolysis gases will be manufactured having the possibility of obtaining at least a liquid hydrocarbon fraction from at least a portion of the thermolysis gases.

It is desirable that the installation is additionally provided with a mechanism adapted to heat the gas flow exiting the ejector device for preparing the hot gases to be recirculated to the reactor and preferably that this mechanism is manufactured as a burner of the ejector type. The combustion gases of this mechanism must feed the gas flow exiting the ejector device for preparing the hot gases; the inlet of the burner must be connected to the outlet of the thermolysis gases of the reactor.

### GENERAL DESCRIPTION OF THE FIGURES

Later on, the present invention will be explained in detail by means of different examples and embodiments of its use, making reference to the enclosed figures.
Figure 1 schematically shows the installation according to the first embodiment of the invention.
Figure 2 schematically shows the installation according to the first embodiment of use of the invention, however it differs from Figure 1 in the implementation of the feeding mechanism of the crushed tyres to the reactor.
Figure 3 schematically shows the installation according to the first embodiment of use of the invention, however this is additionally provided with the burner.
Figure 4 schematically shows the installation according to the second embodiment of use of the invention.
Figure 5 schematically shows the installation according to the second embodiment of use of the invention, which differs from Figure 4 in that this is provided with elements of the condensation system of the gaseous fraction of liquid hydrocarbons.The identical or analogous knots of the different figures have the same symbologies, with respect to the common elements.

### EXAMPLES OF APPLICATION OF THE INVENTION

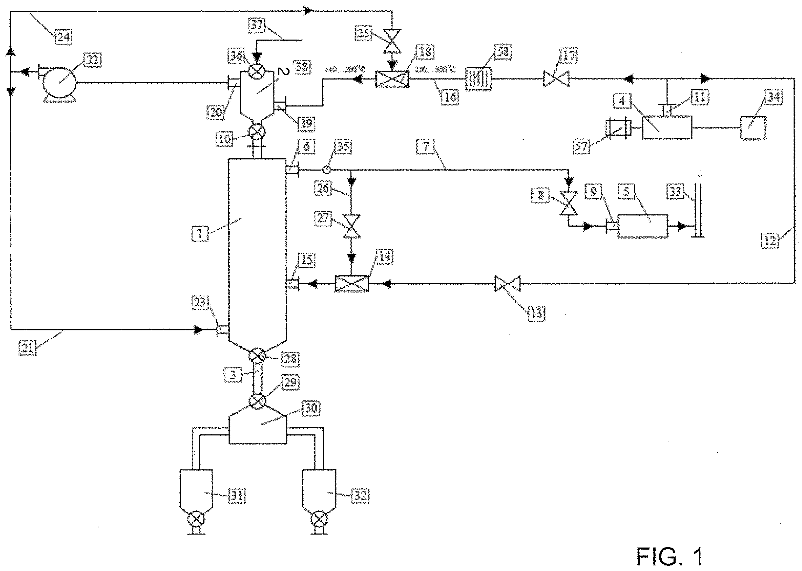

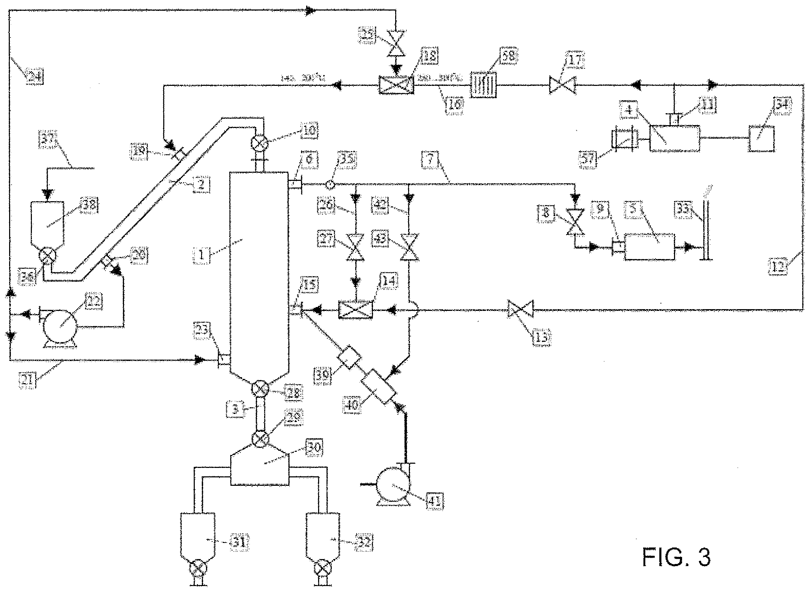

The installation for the thermal treatment of used tyres according to the first embodiment of use of the invention, is explained in detail by making reference to Figures 1 and 3.

The installation of Figure 1 comprises an airtight vertical reactor (1) with an thermo-insulated cover with a feeding mechanism of the reactor (2) which corresponds to a hopper for raw material with a pre-heating system thereof, placed above the reactor (1), a receiving means of solid thermolysis products (3), an internal combustion engine (hereinafter ICE) (4) and a mechanism for using thermolysis gases (5) manufactured as a mechanism or apparatus, or device of the heating type (combined energetic exploitation).

The reactor (1) by means of the thermolysis gases outlet (6) through the conduct (7) having a consumption gas meter (8) is connected to the inlet (9) of the device for using thermolysis gases (5). The mechanism for feeding raw material (2) to the reactor (1) is attached to the reactor (1) by means of a feeder airlock (10).

The exhaust device (11) of ICE (4) by means of the tube (12) with a consumption gas meter (13) through a first ejector device for preparing hot gases (14) (hereinafter "first ejector (14)") is connected to a first connecting tube for gases entering (15) of the reactor (1); the tube (16) which includes a gas consumption meter (17) is connected to the second ejector device for preparing hot gases (18) (hereinafter "second ejector (18)") and the latter is connected to the gas inlet (19) of the feeding mechanism (2) of the reactor (1). The feeding mechanism of the reactor (2) through the gas outlet (20) by means of the tube (21), using a mechanism for pulling gases (22) enters the reactor (1) through a second feeding tube (23) and by means of the tube (24) which has a gas consumption meter (25) and is connected to the second ejector (18).

The thermolysis gas outlet (6) of the reactor (1) through the tube (26) has a gas consumption meter (27) which is attached to the first feeding tube (15) of the reactor by means of a first ejector (14).

In order to supply pre-heated raw material to the reactor (1), the gas inlet (19) with respect to the feeding mechanism (2) is located in the lower portion thereof and the gas outlet (20) of the feeding mechanism (2) is located in the upper portion of said mechanism.

The thermolysis gas outlet (6) is located in the upper part of the reactor (1). The first tube (15) being connected to the device for preparing hot gases is located in the central part of the reactor (1), within the reaction zone and the second tube (23) for supplying gases to be cooled, is located in the lower part of the reactor, within the cooling zone.

The reactor (1) is connected to the means for receiving the solid thermolysis products (3) through a feeder airlock (28) located in the lower part of the reactor. The means for receiving the thermolysis solid products (3) through the airlock feeder (29) is connected to the magnetic separator (30) aimed to separate the solid carbon black and others, from the metallic reinforcement, which remains in the receiving hopper of metal products (31) and the solid hydrocarbon (carbon black) remains in the hopper of solid hydrocarbon products (32).

The mechanism for using thermolysis gases (5) can serve for different purposes such as for instance a boiler connected to a derivation system for combustion gases (33).

In addition to this, the mechanism for using thermolysis gases (5) can be manufactured by adding a device for using combustion gases in order to transfer the residual temperature to elements adapted to the use thereof, such as coils among others.

The gas consumption meters (8), (13), (17), (25) and (27) installed in the gas conducting tubes can be made with a manually operated system or with an electrically driven system which must be resistant to the high temperatures of gases.

In order to create a pulling environment (22) a vacuum fan or an ejector is used.

For the object of the present invention, the term ICE (4) is used to name any piston or Diesel engine (Otto cycle) which produce exhaust fumes with the necessary temperature for the purposes and uses of the invention. Alternatively, can be used internal combustion engines of electrical stations or Diesel generators which transform mechanical energy from the internal combustion engine into electric energy by means of an electric generator and which also generate exhaust fumes with the necessary temperature for the development of the processes described in this invention.

ICE (4) consumes the fuel supplied by the power supply (34). The fuel is selected based on the type of ICE (4) and can be used, for instance, natural gas (at the beginning of the process), thermolysis gas, thermolysis diesel, carbon black gas and other energy sources.

The feeding mechanism (2) of the reactor (1) is provided in the upper portion with an airlock feeder (36) to load the crushed tyres which are carried by the conveyor (37).

In order to control and regularize the thermolysis process, the installation has an oxygen detection sensor (35), installed in the tube (7). The installation also has temperature and pressure control systems for thermolysis zones (not shown in the Figures).

The reactor (1) is provided with a filing level meter (sensor) of raw material (not shown in the Figures).

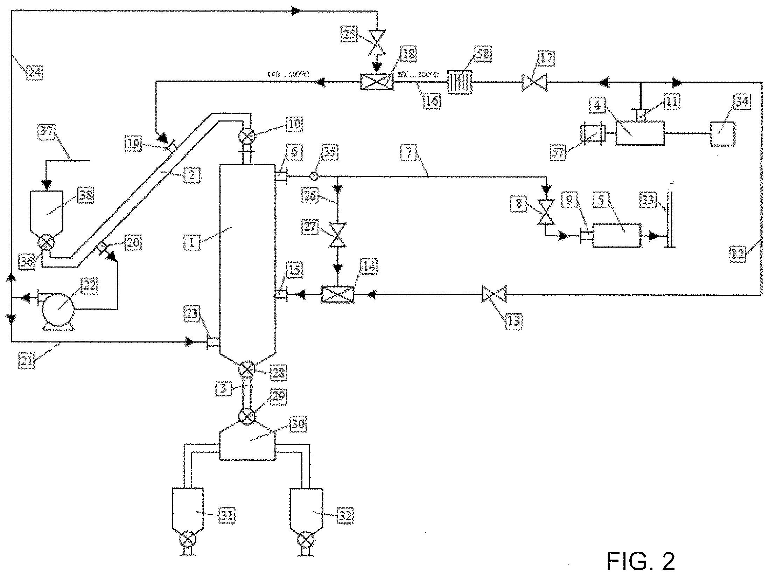

In another modification of the first embodiment of the invention, according to Figure 2, unlike Figure 1, the feeding mechanism of the reactor (2) can be made as a closed conveyor system having incorporated therein a pre-heating function of the raw material, connected to the reactor through the airlock feeder (10). The closed conveyor (2) by means of the airlock feeder (36) is connected to the receiving hopper (38) which is fed by the conveyor (37) with crushed tyres.

In the third modification of the first embodiment of the invention, according to Figure 3, unlike Figure 2, the installation can be provided with an ejector-type burner (40) (hereinafter ejector 40) connected to the first gas feeding tube (15) of the reactor (1) through a shut-off valve (39). In this case, the ejector (40) must be provided and connected with an air supply mechanism (41) and also this ejector (40) must be connected by means of a tube (42) and through a gas consumption meter (43) to the gas tube (7). Another embodiment is also possible when the tube (42) having the gas consumption meter (43) installed, can be connected to the tube (26) (not shown in Figure 3). And also the embodiment in which the tube (24) is disconnected and instead of the second ejector (18) a heat exchanger is installed (not shown in Figure 3).

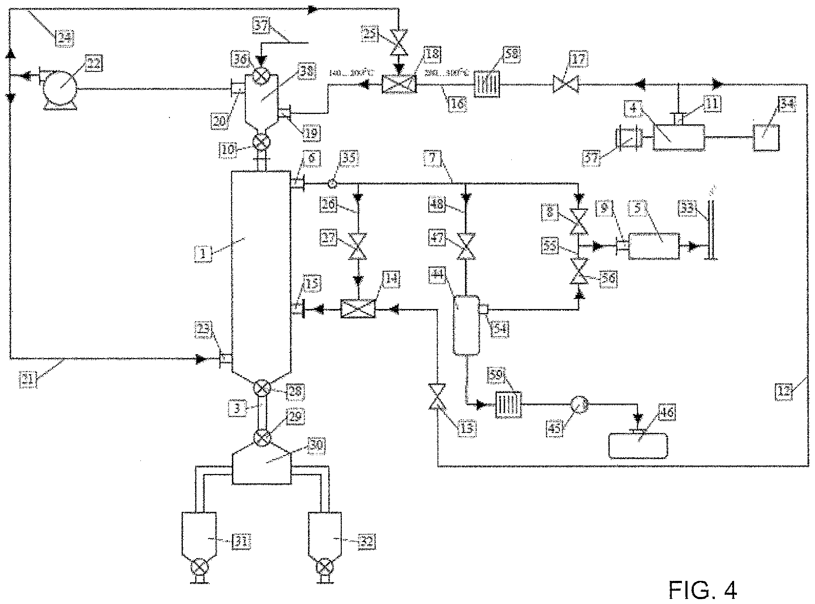

In the fourth embodiment of the invention, Figure 4, unlike the first embodiment, the installation must be provided with an obtaining device (44) hereinafter also called condenser, of at least one liquid hydrocarbon fraction of thermolysis gases, exiting the reactor.

In this embodiment, the mechanism for using thermolysis gases (5) must include a condenser (44) for at least one liquid hydrocarbon fraction.

As indicated in Figure 4, the circuit for obtaining or releasing a liquid hydrocarbon fraction is manufactured as a condenser (44) adapted to release the liquid hydrocarbon fractions, attached by means of a pump (45) to an accumulator tank of the liquid fraction (46).

The condenser (44) is connected through the gas meter (47) installed in the tube (48) to the tube (7) which connects it to the thermolysis gases outlet (6). The liquid fraction obtained and stored in the accumulator of liquid fraction (46) can be sent to processing and then supplied to the device (5) for its combustion and delivery to consumers.

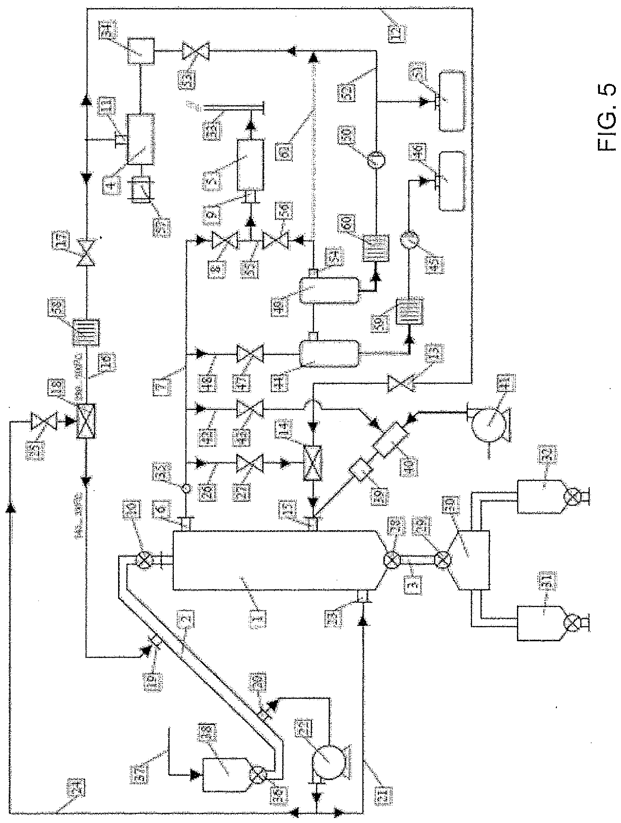

The condenser (44) as indicated in Figure 4 can be made as a double circuit, installing two condenser devices (44) and (49) in series. The second complementary condenser (49) according to Figure 5 is connected by means of a pump (50) to the accumulator of the liquid fraction (51). In this embodiment, the condenser (44) is adapted to obtain a liquid heavy hydrocarbon fraction and the second condenser (49) is adapted to release a liquid light hydrocarbon fraction. In the case of the operation of ICE with the liquid fuel, the second condenser (49) can be connected through the pump (50) and tube (52) to the liquid consumption meter (53) and the feeder or source of fuel (34).

The circuit for releasing a liquid hydrocarbon fraction (44) must be connected to the non-condensed gases outlet (54) by means of the tube (55), using a gas consumption meter (56) to the inlet (9) of the mechanism for using thermolysis gases (5).

The operation of installation and process of thermal destruction of used tyres will be later explain in detail in the example of first embodiment of the invention, according to figures 1 to 3.

The previously crushed used tyres are supplied by the conveyor (37) to a feeding mechanism (2) of the reactor (1). The size of the pieces of crushed tyres and other rubber waste can be between 3 and 35 mm and said pieces can have irregular forms.

From the feeding mechanism (2) the pieces of tyres enter the reactor (1) through the airlock feeder (10).

In order to begin the thermolysis process the gas consumption meter (27) is closed and the gas consumption meters (13) and (17) are opened, the ICE is started (4) by directing the first portion of exhaust fumes from the exhaust device (11) by the tube (12) through the gas consumption meter (13); connecting the first ejector (14) and then connecting the first gas connecting tube (15) to the reactor (1).

The second portion of exhaust fumes is directed by means of conduct (16) together with the gas consumption meter (17) to the second ejector (18) through which the feeding mechanism (2) of the reactor is connected through the gas entering tube (19).

This gas transference from the ICE (4) to the reactor (1) is made until the oxygen detection sensor (35) indicates absence of oxygen in the gases exiting the reactor (1).

The temperature of the exhaust fumes exiting the ICE (4) is between 700°C to 850 °C.

The exhaust fumes from ICE (4) supplied by means of tube (16) and through the gas consumption meter (17) are cooled in the second ejector (18) until reaching the necessary temperature by means of the mixture with gasses which have already passed through the feeding mechanism (2) of reactor (1), exiting through outlet (20) of feeding mechanism (2) of reactor (1). The exhaust fumes that already passed through the feeding mechanism (2) arrive to the second ejector (18) through the tube (24) and the gas consumption meter (25).

At the gas inlet (19) of the feeding mechanism (2), the exhaust fumes from ICE (4) are supplied from the second ejector (18) having a temperature between 150 °C to 200°C.

Once the operation temperature (thermolysis temperature) has been reached, the gas consumption meter (27) is opened and the continuous thermolysis process starts.

The heating of tyres chips within the feeding mechanism (2) is performed at a temperature between 140°C to 200°C, preferably between 150°C to 180°C.

The temperature of exhaust fumes from ICE (4) exiting by outlet (20) of the feeding mechanism (2) is between the range of 50°C to 110°C, preferably between 60°C to 80°C.

When transferring heat to the raw material within the feeding mechanism (2), the gases exiting the outlet (20) of ICE (4) to tube (21), connected to the pulling mechanism (22) enter by the inlet tube (23) to the cooling zone of reactor (1) to cool the solid thermolysis products.

The thermolysis gases exiting the outlet (6) of reactor (1) and then directed by means of tube (7) through the gas consumption meter (8) to the inlet (9) of the mechanism for using thermolysis gases (5) are used to obtain energy.

The thermolysis gas flow exiting the gas outlet (6) of reactor (1) is separated in two portions. The first portion is directed by tube (26) through the gas consumption meter (27) to be recirculated in the reactor (1) through the first ejector (14). The second portion (which is not directed to be recirculation) is directed to the mechanism for using thermolysis gases (5) by tube (7) through the gas consumption meter (8).

In the first ejector (14) are mixed the entering thermolysis gases and the exhaust fumes from ICE (4).

The temperature at the inlet of the first ejector (14) of the first portion of the thermolysis gases is between 250°C to 320°C, preferably between 280°C to 300°C.

In the installation shown in Figure 1 and Figure 2, the temperature of the gas flow exiting the first ejector (14) is within the necessary limit to perform the thermolysis process.

For the thermolysis process of raw material, the hot gas flow is supplied to the reaction zone of the reactor (1) (Figure 1 and Figure 2) having a temperature between 400°C to 550°C (preferably between 420°C to 450°C) through the first connection tube for the entering gases (15) from the first ejector (14).

The second portion of the exiting thermolysis gases, is supplied to the mechanism for using thermolysis gases (5) by means of tube (7) through the gas consumption meter (8), entering to the inlet of said mechanism to be used in obtaining energy.

The exhaust fumes from ICE (4) supplied to the feeding mechanism of the reactor (2) exit by the outlet pipe (20) to the tube (21) and enter through the second gas feeding tube (23) of the reactor (1) in the lower part thereof (cooling zone) to cool the solid thermolysis products. The heated gases after cooling the solid thermolysis products arrive to the reaction zone of reactor 1.

The cooled solid thermolysis products (carbon black, mineral tyres aggregates, metallic reinforcement, etc) exit by the lower part of the reactor (1) through the feeder airlock (28) to the receiving means for the solid thermolysis products (3) and then delivered through the airlock feeder (29), to the magnetic separator (30) to separate the solid thermolysis products , carbon black and others, from the metallic reinforcement.

The receiving means for solid thermolysis products (3) can be manufactured as a conveyor mechanism which also allows to cool the obtained solid products.

The thermolysis process is performed in an oxygen-free gas environment.

The hot gases flow supplied to the first connecting tube for the gases to enter (15) from reactor (1) contains the thermolysis gases and the exhaust fumes from ICE (4) heated until reaching the necessary temperature by means of its mixture in the first ejector (14).

The thermolysis gases exiting the reactor (1) through the thermolysis gases outlet (6) and the gases entering the first ejector (14) do not contain oxygen.

The thermolysis gases contain the exhaust fumes from ICE (4) and the products of depolymerization from used tyres: hydrocarbon gases C1-C5 and also liquid hydrocarbon vapours. The liquid hydrocarbon vapours contain until 60% to 65% of aromatic hydrocarbons (arenes); 16% to 18% of paraffin vapours; between 6% to 11 % of naphthenes vapours.

From the whole volume of thermolysis gases exiting the reactor (1) through the tube (6), the quantity of liquid hydrocarbon gases is up to 43%. This percentage is applied due to the tread wear of used tyres.

The exhaust fumes from ICE (4) are neutral gases because they do not contain free oxygen (02), they have carbon dioxide (CO2), carbon monoxide (CO) nitrogen (N2) and water vapours.

The unsaturated hydrocarbons as well as the liquid hydrocarbon vapours contained in the hot gases flow supplied to the reaction zone, react leading to recombination processes with the hydrocarbon compounds which are on the surface of the tyres chips subject to the thermolysis temperature. During this reaction, the hydrocarbon compounds vapours de C5 to C (14) as well as the hydrocarbon gases C1-C5 are formed.

The exhaust fumes from ICE (4) that enter with a temperature between 50°C to 80°C through the entering pipe (23) to the cooling zone of the reactor (1) for cooling solid thermolysis products, contain water vapours in a quantity between 8% to 10%. Water vapours heated by the heat of solid products react with the hydrocarbons remaining on the surface of solid products: CnHm+H2O = H2+CO+CO2.

The gases heated in the lower cooling zone of reactor (1) then enter into the intermediate zone of the reactor, the thermolysis reaction zone.

Volume ratio limits of the exhaust fumes volume from ICE (4) used for creating an oxygen-free environment, the weight of the raw material to be processed, and also the volume ratio of thermolysis gases supplied to the mechanism for using thermolysis gases (5) in relation to the weight of raw material to be processed, were determined by means of experiments performed from the surface of raw material to be processed and from the process speed.

The ratio of the weight of exhaust fumes from ICE (4) used for creating an oxygen-free environment to the weight of raw material (tyre chips) is selected to be between 0.4:1 to 0.7:1.

The ratio of thermolysis gases supplied to the device for preparing hot gases or first ejector (14) with respect to the weight of the raw material is between 0.30:1 to 0.45:1.

As indicated in Figure 3, for the appropriate gas supply in order to have an stabilized thermolysis process, as needed, due to an insufficient volume of said gases, supplied to the first ejector (14) from ICE (4), the hot gas flow exiting the first ejector (14) can be heated in a complementary way until reaching the necessary thermolysis temperature by means of a combustion process performed in the burner (40).

In this case, a portion of the thermolysis gases exiting the outlet thermolysis gas tube (6) is sent to the ejector-type burner (40) by means of a gas consumption meter (43) through a tube (7) and this attached to tube (42).

The thermolysis process for the second embodiment of the invention is performed in an analogous form to the above-mentioned process.

As indicated in Figure 4, a portion of the thermolysis gases exiting the reactor is directed by tube (48) through the gas consumption meter (47) to the condenser (44). Within the condenser (44) are cooled the thermolysis gases with which is produced the actual separation of the gases with the gases from the liquid carbonated fraction by means of the condensation of the latter, which is delivered through the pump (45) to the liquid fraction accumulator (46). The mixture of the non-condensed gases exiting by non-condensed gas outlet (54) is supplied by tube (55) to the inlet (9) of the mechanism equipment for using thermolysis gases (5).

In the case of the condensation of liquid hydrocarbon fractions with different boiling point, the gas flow passes through two or more condensers (44) (49), placed in series, as indicated in Figure 5 and then, a remaining portion is supplied for its recirculation.

The obtained liquid hydrocarbon fraction can be sent, depending on the type of ICE (4) to the fuel source (34).

The productivity of the installation, with respect to the obtaining of liquid fractions depends on the work regime of the mechanism for using thermolysis gases (5) and is regulated according to the demand.

Later on, examples of embodiments of this method will be shown.

### Example 1

The processing of the crushed used tyres with tyres chips having sizes between 5 mm to 35 mm with a total weight of 600 Kg is performed according to the first embodiment of the invention, Figure 2. As for the quality of the ICE (4) a Diesel installation was used having an engine power of 100 kw and a heating power of 150 Kw. The diesel fuel consumption for the installation was of 26 kg. The weight of the exhaust fumes exiting the ICE (4) having a temperature of 830°C was of 400 kg. The pre-heating of the raw material is performed until reaching a temperature of 200°C. The weight of the exhaust fumes from ICE, used for the pre-heating of the raw material was of 150 kg. The weight of thermolysis gases (recycling) for creating the hot gas flow was of 200 kg. The weight of the exhaust fumes from the ICE for creating the hot gas flow was of 250 kg. The thermolysis process was performed at a temperature of 500°C.

The result obtained from the processing of the raw material was:
- 76 Kw of increase of electric power;
- 354 Kg of increase of the heating power, equivalent by calculation to diesel fuel.
- 183 Kg of solid hydrocarbon product (NH);
- 42.6 Kg of metallic reinforcement.

The ratio of the weight of the exhaust fumes from the ICE to the weight of the processed raw material was of 0.66:1.

The ratio of the weight of thermolysis gases supplied to the mechanism for preparing hot gases to the weight of the processed raw material was of 0.33. 1.

### Example 2

The processing of the crushed used tyres with tyres chips of sizes between 5 mm to 35 mm having a total weight of 500 Kg was performed according to the first embodiment of the invention, Figure 3. As ICE was used a piston engine functioning with natural gas, having an electric power of 50 Kw and a heating power of 75 Kw. The natural gas consumption for the installation was of 16 M3. The weight of the exhaust fumes exiting the ICE having the temperature of 720°C was of 200 Kg. The pre-heating of the raw material was performed until reaching a temperature of 160°C. The weight of the exhaust fumes from the ICE, used for the pre-heating of the raw material was of 150 kg. The weight of thermolysis gases (recycling) used for creating the hot gas flow was of 220 kg. The weight of the exhaust fumes from the ICE used for creating the hot gas flow was of 50 kg. The thermolysis process was performed at a temperature of 450 °C. The weight of thermolysis gases burned in the ejector-type burner for the overheating of the gas flow was of 6 kg. The air weight burned in the ejector-type burner was of 29 Kg.

The result obtained from the processing of the raw material was:
- 26 Kw of increase of electric power;
- 431 M3 of increase of the heating power, equivalent by calculation to the gaseous fuel.
- 153 Kg of solid hydrocarbon product (CB);
- 35.5 Kg of metallic reinforcement.

The ratio of exhaust gases to the processed raw material was of 0.40:1.

The ratio of thermolysis gases supplied to the device for preparing hot gases to the processed raw material was of 0.44. 1.

### Example 3

The processing of the crushed used tyres with tyres chips having sizes between 5 mm to 35 mm with a total weight of 600 Kg was performed according to the first embodiment of the invention, Figure 4.

As for the quality of the ICE, a diesel installation was used with a power of 100 Kw and a heating power of 150 Kw. The diesel fuel consumption for the installation was of 26 kg. The weight of the fumes exiting the ICE (4) having a temperature of 830°C was of 400 kg. The pre-heating of the raw material is performed until reaching a temperature of 200°C. The weight of the exhaust fumes from ICE, used for the pre-heating of the raw material was of 150 kg. The weight of thermolysis gases (recycling) for creating the hot gas flow was of 200 kg. The weight of the exhaust fumes from the ICE for creating the hot gas flow was of 250 kg. The thermolysis process was performed at a temperature of 500°C.

The result obtained from the processing of the raw material was:
- 76 Kw of increase of electric power;
- 24,5 Kg of increase of the heating power, equivalent by calculation to diesel fuel.
- 183 Kg of solid hydrocarbon product (NH);
- 42.6 Kg of metallic reinforcement;
- 355 Kg of condensed hydrocarbon liquid having a density of 0.85 gr/cm3.

The ratio of the weight of the exhaust fumes from the ICE to the weight of the raw material was of 0.66:1.

The ratio of the weight of thermolysis gases supplied to the device for preparing hot gases to the weight of the raw material was of 0.33. 1

### Example 4

The processing of the crushed used tyres with tyres chips having sizes between 5 mm to 35 mm with a total weight of 500 Kg was performed according to the second embodiment of the invention, Figure 5.

As for the ICE, a piston engine functioning with natural gas having an electric power of 50 Kw and a heating power of 75 Kw was used. The natural gas consumption for the installation was of 16 M3. The weight of the exhaust fumes exiting the ICE having the temperature of 720°C was of 200 Kg. The pre-heating of the raw material is performed until reaching a temperature of 160°C. The weight of the exhaust fumes from the ICE used for the pre-heating of the raw material was of 150 Kg. The weight of thermolysis gases (recycling) used for creating the hot gas flow was of 220 kg. The weight of the exhaust fumes from the ICE used for creating the hot gas flow was of 50 Kg. The thermolysis process was performed at a temperature of 450 °C. The weight of thermolysis gases burned in the ejector-type burner for the overheating of the gas flow was of 6 kg. The air weight used in the ejector-type burner was of 29 Kg.

The result obtained from the processing of the raw material was:
- 26 Kw of increase of electric power;
- 28 M3 of increase of the heating power, equivalent by calculation to the gaseous fuel.
- 153 Kg of solid hydrocarbon product (NH);
- 35.5 Kg of metallic reinforcement.
- 310 Kg of condensed liquid hydrocarbon, the density of the heavy liquid was of 0.87 gr./cm3, the density of the light liquid was of 0.82 gr./cm3;

The ratio of exhaust gases to the processed raw material was of 0.40:1.

The ratio of thermolysis gases supplied to the device for preparing hot gases to the processed raw material was of 0.44. 1.

In all previously indicated examples were utilized used tyres having a metallic reinforcement. After the separation from the solid thermolysis product into solid hydrocarbon, carbon black (CB) which includes inorganic materials added to the manufacturing process of the tyre, the CB can be reused without the need of additional treatments in the manufacturing of some parts of new tyres, the ASTM indexes for the obtained carbon black are the following:
Iodine index (ml/100 g): 84-90
External surface, (STAB): 100-105
Transparency of toluene extract (%): 85-87
Adsorption (ml/100g): 82-87.

It is worth highlighting that the pre-heating of the raw material increases the thermal conductivity index of the rubber, which allows to speed up the thermolysis process thus strongly reducing the volume of the reactor.

The exhaust fumes from ICE aimed to cool the solid thermolysis products clean the surface of the solid thermolysis products removing the vapours of the hydrocarbon liquids which greatly improves the obtained solid product.

Taking into account that the thermolysis gases are mixed with the exhaust fumes from the ICE to create the hot gas flow and the mixture is performed at temperatures not higher than 900°C, with this temperature only a small portion of the hydrocarbon liquids are decomposed into hydrocarbon gases. However, in the oxygen-free environment is ensured the content of a high level of liquid hydrocarbon vapours which speeds up considerably the thermolysis process and increases the quality of the products received from the processing of tyres. The process according to the offered invention allows to obtain an increased percentage of light hydrocarbon fractions in the finished products.

The reduction of the energy consumption is ensured by using the pressure of the exhaust fumes from the ICE to obtain the necessary pressure in the hot gas flow.

### INDUSTRIAL APPLICATION

The offered method to use tyres and rubber waste is ecologically safe; this is an ecologically clean process to obtain hydrocarbons from waste.

The offered method and installations ensure the operation of the invention, in an autonomous regime, completely independent from external power sources. The same is applicable to mobile installations which can be installed on a truck in order process tyres in any place in which said waste are accumulated.

The invention allows to economically use the heating power as well as the energy from exhaust fumes pressure and provides the possibility of excluding the use a forced-draft mechanisms, increasing the safety of exploitation of the technology scheme.

The invention allows to increase the interaction of recirculation gases within the reactor with the raw material, which ensures the reduction of the processing time and allows to increase the effectiveness of the treatment of the hydrocarbon raw material.

The invention allows to increase the range of useful finished products by means of the obtaining of the complementary electrical capacity.

## Claims

1. A thermal treatment method of used tyres based on the pre-heating of the previously crushed raw material within a feeding mechanism of the reactor which allows to increase the efficiency of the thermal treatment through the reduction of energy consumption by means of the use of residual energy being said method **CHARACTERIZED in that** it comprises the following stages:
a) supplying said previously crushed used tyres to a conveyor (37),
(b) feeding said previously crushed used tyres from said conveyor (37) to a feeding mechanism (2) located on a reactor (1);
(c) pre-heating previously crushed used tyres located in the inside of said feeding mechanism (2) having a first flow of first exhaust fumes coming from an Internal Combustion Engine (hereinafter ICE) (4);
(d) feeding said previously crushed and heated used tyres from the inside of said feeding mechanism (2) to said reactor (1),
(e) supplying a second flow of exhaust fumes coming from said ICE (4) through a first gas connecting tube (15) located in the intermediate zone of said reactor (1) or reaction thermolysis zone, creating in said reactor (1) an oxygen-free environment, thus generating with said thermolysis reaction a gas thermolysis flow exiting the reactor (1) through an outlet (6) and a volume of solid thermolysis products which fall towards the lower portion of said reactor (1);
(f) recirculating gases used in stage (c) where the previously pre-heated crushed used tyres are preheated from the inside of said feeding mechanism (2) towards an inlet tube (23) located in a lower cooling zone of reactor (1) to cool the solid thermolysis products obtained in stage (e);
(g) discharging the solid thermolysis products cooled in the stage (f) as carbon black, mineral aggregates of tyres; metallic reinforcement and others exiting by the lower part of the reactor (1) through a feeder airlock (28) towards a means for receiving the solid thermolysis products (3);
(h) delivering the solid thermolysis products cooled through an airlock feeder (29) towards a magnetic separator (30) to separate the solid thermolysis products, carbon black and others from the metallic reinforcement; and
(i) recirculating said thermolysis gas flow exiting the reactor (1) through an outlet (6) obtained in stage (e) towards said first gas connecting tube (15) located in the intermediate zone of said reactor (1) or thermolysis reaction zone, performing a mixture of said gas and the exhaust fumes from the ICE by means of an ejector mechanism.

2. The thermal treatment method of used tyres according to claim 1 **CHARACTERIZED in that** said thermolysis gases exiting by the outlet (6) of reactor (1) in stage (e) are directed through a tube (7) towards a mechanism for using thermolysis gases (5) in order to use them and obtain energy.

3. The thermal treatment method of used tyres according to claim 1 **CHARACTERIZED in that** said thermolysis gas flow exiting by said gas outlet (6) of reactor (1) is separated into two portions, wherein a first portion is directed by a tube (26) through the gas consumption meter (27) for its recirculation in said reactor (1) through a first ejector device for preparing hot gases (14), and wherein a second portion is directed towards the mechanism for using thermolysis gases (5) by means of a tube (7) through the gas consumption meter (8).

4. The thermal treatment method of used tyres according to claims 2 or 3 **CHARACTERIZED in that** said mechanism for using thermolysis gases (5) is connected to a derivation system of combustion gases (33) so as said gases can be used in a boiler or they can be sent towards the ICE (4).

5. The thermal treatment method of used tyres according to claim 1 **CHARACTERIZED in that** it comprises recirculating the gases used in stage (c) that have passed through the feeding mechanism (2) towards a second ejector device for preparing hot gases (18), wherein in said second ejector device for preparing hot gases (18), said gases used in stage (c) are mixed with the first flow of exhaust fumes from the ICE (4) to recirculate them towards the same stage (c).

6. The thermal treatment method of used tyres according to claim 1 **CHARACTERIZED in that** the products separated in stage (h) are sent from said magnetic separator (30) towards a receiving hopper of metal products (31) and the solid hydrocarbons (carbon black) are sent towards a hopper for solid hydrocarbon products (32).

7. The thermal treatment method of used tyres according to claim 1 **CHARACTERIZED in that** in said stage (b) the previously crushed used tyres are fed through a feeding mechanism of the reactor (2) which comprises a closed conveyor system with the pre-heating function of raw material incorporated therein.

8. The thermal treatment method of used tyres according to claim 2 or 3 **CHARACTERIZED in that** the gases from stage (i) are sent to an ejector burner (40) connected to said gas feeding tube (15) of reactor (1) through the shut-off valve (39).

9. The thermal treatment method of used tyres according to claim 1 **CHARACTERIZED in that** at least one fraction of the thermolysis gases exiting the reactor (1) through said outlet (6) is sent to a condenser (44).

10. The thermal treatment method of used tyres according to claim 9 **CHARACTERIZED in that** said gases condensed in the condenser (44) are stored in a liquid fraction accumulator (46) to be processed, purified and supplied to a using device (5) for its combustion or to be delivered to consumers.

11. A thermal treatment method of used tyres according to claim 9 or 10 **CHARACTERIZED in that** said condensation stage is performed in a double circuit where a first liquid fraction of heavy hydrocarbons is performed in a first condenser (44) and a second liquid fraction of light hydrocarbons is performed in a second condenser (49).

12. The thermal treatment method of used tyres according to any of the preceding claims 1 to 11 **CHARACTERIZED in that** the ratio of the weight of exhaust fumes from the ICE, which are used to create the oxygen-free environment to the weight of the raw material is within a range of 0.4:1 to 0.7:1.

13. The thermal treatment method of used tyres according to any of the preceding claims 1 to 11 **CHARACTERIZED in that** the ratio of the weight of thermolysis gases supplied to the mechanism for preparing hot gases to the weight of the raw material is between 0.30: 1 to 0.45: 1.

14. The thermal treatment method of used tyres according to any of the claims 1 to 11 **CHARACTERIZED in that** the pre-heating of the raw material in stage (c) is performed within a temperature range of 140°C to 200°C, preferably from 150°C to 180°C.

15. The thermal treatment method of used tyres according to any of the claims 1 to 11 **CHARACTERIZED in that** the gases are supplied to said first gas connecting tube (15) towards the intermediate zone of said reactor (1) or thermolysis reaction zone having a temperature between 280-300°C.

16. The thermal treatment method of used tyres according to any of the claims 1 to 11 **CHARACTERIZED in that** the thermolysis process of stage(e) is performed at a temperature between 400°C to 550°C and preferably between 420°C to 450°C.

17. The thermal treatment method of used tyres according to any of the claims 1 to 11 **CHARACTERIZED in that** the supply of exhaust fumes from the ICE (4) from the pre-heating mechanism to the cooling zone of the reactor (1) is performed at a temperature within a range from 50°C to 110°C and preferably from 60°C to 80°C.

18. A thermal treatment installation of used tyres based on the pre-heating of the previously crushed raw material within a feeding mechanism of the reactor which allows to increase the efficiency of the thermal treatment through the reduction of energy consumption **CHARACTERIZED in that** it comprises:
an airtight vertical reactor (1) with a reaction zone and a cooling zone of the solid thermolysis waste having a feeding airlock (10) of previously crushed used tyres, located above said reactor (1), a discharge airlock (28) of said solid thermolysis waste located under said reactor (1), a first connecting tube for gases to enter (15) located in the intermediate portion of said reactor (1), a thermolysis gases outlet (6) located in the upper portion of said reactor (1) and a second gas feeding tube (23) located in the lower portion wherein said cooling zone of the solid thermolysis waste is;
a feeding mechanism (2) of previously crushed used tyres located in the upper portion of said reactor (1) above said feeding airlock (10) having a gas inlet (19) for pre-heating said previously crushed used tyres and a gas outlet (20) where said gas outlet (20) has: a first conductor (21) connected to said second gas feeding tube (23) located in the lower portion or cooling zone of the reactor (1) to cool the solid thermolysis products and b) a second tube (24) for recirculating the pre-heating gases towards the same feeding mechanism (2);
a receiving means for solid thermolysis products (3) located under said outlet airlock (28) which is connected through an airlock feeder (29) with a magnetic separator (30) which has a first outlet towards a receiving hopper for metal products (31) and a second outlet towards a hopper for solid hydrocarbon products (32);
a mechanism for using thermolysis gases (5) of the type of a heating apparatus for the energy combined exploitation, which is connected to the derivation system of combustion gases (33);
an internal combustion engine (hereinafter ICE) (4) of the Otto cycle type, ICE (4) which consumes fuel supplied by the power source (34) wherein said ICE (4) generates gases to be supplied to the first connecting tube for the gases to enter (15) of the reactor (1) and to the gas inlet (19) of a feeding mechanism (2) of the reactor (1);
a pulling mechanism (22) connected to the gas outlet (20) of the feeding mechanism (2) of the reactor (1) which sends the outlet gases through a tube (24) towards said feeding mechanism (2) to create a recirculation and towards the cooling gas inlet of the reactor (1) through a conductor (21);
a first ejector device for preparing hot gases (18) connected to said ICE (4) and to said pulling mechanism (22) which prepares the gases to introduce them into said gas inlet (19) of the feeding mechanism (2); and
a second ejector device for preparing hot gases (14) connected to said ICE (4) and to said thermolysis gas outlet (6) of said reactor (1) which prepares the gases to introduce them into said first connecting tube for gases to enter (15) of said reactor (1).

19. The thermal treatment installation of used tyres according to claim 11 **CHARACTERIZED in that** said feeding mechanism of the reactor (2) can be made in the form of a closed conveyor system with the pre-heating function of raw material incorporated therein, connected to the reactor (1) through the airlock feeder (10) being said closed conveyor (2) connected through the airlock feeder (36) which in turn is connected to the receiving hopper (38) which is fed by a conveyor (37) with crushed tyres.

20. The thermal treatment installation of used tyres according to claim 11 **CHARACTERIZED in that** said installation can be additionally provided with an ejector-type burner (40) connected to said first gas feeding tube (15) of the reactor (1).

21. The thermal treatment installation of used tyres according to claim 12 **CHARACTERIZED in that** said ejector-type burner (40) is provided with and connected to an air supply mechanism (41) and is also connected by means of the tube (42) to said thermolysis gas outlet (6) of said reactor (1).

## Patentansprüche

1. Verfahren zur Wärmebehandlung von Altreifen, das auf dem Vorwärmen des zuvor zermahlenen Rohmaterials innerhalb eines Zuführmechanismus des Reaktors basiert, der ermöglicht, den Wirkungsgrad der Wärmebehandlung durch die Verringerung des Energieverbrauchs mittels der Verwendung von Restenergie zu erhöhen, wobei das Verfahren **DADURCH GEKENNZEICHNET ist, dass** es folgende Stufen umfasst:
(a) Abgeben der zuvor zermahlenen Altreifen an einen Förderer (37),
(b) Zuführen der zuvor zermahlenen Altreifen von dem Förderer (37) zu einem Zuführmechanismus (2), der an einem Reaktor (1) angeordnet ist;
(c) Vorwärmen der zuvor zermahlenen Altreifen, die an der Innenseite des Zuführmechanismus (2) angeordnet sind, mit einer ersten Strömung von ersten Abgasen, die von einem Verbrennungsmotor (nachfolgend als ICE bezeichnet) (4) kommen;
(d) Zuführen der zuvor zermahlenen und erwärmten Altreifen von der Innenseite des Zuführmechanismus (2) zu dem Reaktor (1),
(e) Abgeben einer zweiten Strömung von Abgasen, die von dem ICE (4) kommen, durch ein erstes Gasanschlussrohr (15), das in der Zwischenzone des Reaktors (1) oder der Reaktionsthermolysezone angeordnet ist, Erzeugen, in dem Reaktor (1), einer sauerstofffreien Umgebung, dadurch Erzeugen, mit der Thermolysereaktion, einer Gasthermolyseströmung, die den Reaktor (1) durch einen Auslass (6) verlässt, und eines Volumens von festen Thermolyseprodukten, die in Richtung des unteren Abschnitts des Reaktors (1) fallen;
(f) Rückführen von Gasen, die in Stufe (c) verwendet werden, wo die zuvor vorgewärmten zermahlenen Altreifen von der Innenseite des Zuführmechanismus (2) in Richtung eines Einlassrohrs (23) vorgewärmt werden, das in einer unteren Kühlzone des Reaktors (1) zum Kühlen der festen Thermolyseprodukte angeordnet ist, die in Stufe (e) erhalten wurden;
(g) Entladen der in der Stufe (f) gekühlten festen Thermolyseprodukte als Ruß, Mineralaggregate von Reifen; metallische Verstärkung und andere, die durch den unteren Teil des Reaktors (1) durch eine Zuführluftschleuse (28) in Richtung einer Einrichtung zur Aufnahme der festen Thermolyseprodukte (3) austreten;
(h) Abliefern der festen Thermolyseprodukte, die durch eine Luftschleusenzufuhr (29) gekühlt werden, in Richtung eines Magnetabscheiders (30), um die festen Thermolyseprodukte, Ruß und andere von der Metallverstärkung zu trennen; und
(i) Rückführen der Thermolysegasströmung, die aus dem Reaktor (1) austritt, durch einen in Stufe (e) erhaltenen Auslass (6) in Richtung des ersten Gasanschlussrohrs (15), das in der Zwischenzone des Reaktors (1) oder der Thermolysereaktionszone angeordnet ist und Durchführen einer Mischung des Gases und der Abgase aus dem ICE mittels eines Ejektormechanismus.

2. Verfahren zur Wärmebehandlung von Altreifen nach Anspruch 1, **DADURCH GEKENNZEICHNET, dass** die Thermolysegase, die durch den Auslass (6) des Reaktors (1) in Stufe (e) austreten, durch ein Rohr (7) in Richtung eines Mechanismus zur Verwendung von Thermolysegasen (5) geleitet werden, um sie zu verwenden und Energie zu gewinnen.

3. Verfahren zur Wärmebehandlung von Altreifen nach Anspruch 1, **DADURCH GEKENNZEICHNET, dass** die Thermolysegasströmung, die durch den Gasauslass (6) des Reaktors (1) austritt, in zwei Teile getrennt wird, wobei ein erster Teil durch ein Rohr (26) durch den Gasverbrauchsmesser (27) zur Rückführung davon in den Reaktor (1) durch eine erste Ejektorvorrichtung zum Herstellen von Heißgasen (14) geleitet wird, und wobei ein zweiter Teil in Richtung des Mechanismus zum Verwenden der Thermolysegase (5) mittels eines Rohrs (7) durch den Gasverbrauchsmesser (8) geleitet wird.

4. Verfahren zur Wärmebehandlung von Altreifen nach Anspruch 2 oder 3, **DADURCH GEKENNZEICHNET, dass** der Mechanismus zur Verwendung von Thermolysegasen (5) mit einem Ableitungssystem von Verbrennungsgasen (33) verbunden ist, sodass die Gase in einem Kessel verwendet werden können oder in Richtung des ICE (4) geschickt werden können.

5. Verfahren zur Wärmebehandlung von Altreifen nach Anspruch 1, **DADURCH GEKENNZEICHNET, dass** es das Rückführen von Gasen umfasst, die in der Stufe (c) verwendet werden, die den Zuführmechanismus (2) durchlaufen haben, in Richtung einer zweiten Ejektorvorrichtung zur Herstellung von Heißgasen (18), wobei in der zweiten Ejektorvorrichtung zur Herstellung von Heißgasen (18) die Gase, die in der Stufe (c) verwendet werden, mit der ersten Strömung von Abgasen aus dem ICE (4) gemischt werden, um sie in Richtung der gleichen Stufe (c) zurückzuführen.

6. Verfahren zur Wärmebehandlung von Altreifen nach Anspruch 1, **DADURCH GEKENNZEICHNET, dass** die Produkte, die in der Stufe (h) getrennt wurden, von dem Magnetabscheider (30) zu einem Aufnahmetrichter von Metallprodukten (31) geschickt werden und dadurch, dass die festen Kohlenwasserstoffe (Ruß) in Richtung eines Trichters für feste Kohlenwasserstoffprodukte (32) geschickt werden.

7. Verfahren zur Wärmebehandlung von Altreifen nach Anspruch 1, **DADURCH GEKENNZEICHNET, dass** in der Stufe (b) die zuvor zermahlenen Altreifen durch einen Zuführmechanismus des Reaktors (2) zugeführt werden, der ein geschlossenes Fördersystem mit der Vorwärmfunktion von darin enthaltenem Rohmaterial umfasst.

8. Verfahren zur Wärmebehandlung von Altreifen nach Anspruch 2 oder 3, **DADURCH GEKENNZEICHNET, dass** die Gase aus der Stufe (i) zu einem Ejektorbrenner (40) geschickt werden, der mit dem Gaszufuhrrohr (15) des Reaktors (1) durch ein Sperrventil (39) verbunden ist.

9. Verfahren zur Wärmebehandlung von Altreifen nach Anspruch 1, **DADURCH GEKENNZEICHNET, dass** die Thermolysegase, die durch den Auslass (6) des Reaktors (1) austreten, zu einem Kondensator (44) geschickt werden.

10. Verfahren zur Wärmebehandlung von Altreifen nach Anspruch 9, **DADURCH GEKENNZEICHNET, dass** die Gase, die in dem Kondensator (44) kondensiert werden, in einem Flüssigfraktionsammler (46) gespeichert werden, um verarbeitet, gereinigt und einer Verwendungsvorrichtung (5) zur Verbrennung oder zur Lieferung an die Verbraucher abgeliefert werden.

11. Verfahren zur Wärmebehandlung von Altreifen nach Anspruch 9 oder 10, **DADURCH GEKENNZEICHNET, dass** die Kondensierstufe in einer Doppelschaltung durchgeführt wird, in der eine erste Flüssigfraktion von schweren Kohlenwasserstoffen in einem ersten Kondensator (44) und eine zweite Flüssigfraktion von leichten Kohlenwasserstoffen in einem zweiten Kondensator (49) erfolgt.

12. Verfahren zur Wärmebehandlung von Altreifen nach einem der vorhergehenden Ansprüche 1 bis 11, **DADURCH GEKENNZEICHNET, dass** das Verhältnis zwischen dem Gewicht der Abgase aus dem ICE, die zum Erzeugen der sauerstofffreien Umgebung verwendet werden, und dem Gewicht des Rohmaterials innerhalb eines Bereichs von 0,4:1 bis 0.7:1 liegt.

13. Verfahren zur Wärmebehandlung von Altreifen nach einem der vorhergehenden Ansprüche 1 bis 11, **DADURCH GEKENNZEICHNET, dass** das Verhältnis zwischen dem Gewicht der Thermolysegase, die dem Mechanismus zum Herstellen von Heißgasen zugeführt werden, und dem Gewicht des Rohmaterials zwischen 0,30:1 bis 0.45:1 liegt.

14. Verfahren zur Wärmebehandlung von Altreifen nach einem der Ansprüche 1 bis 11, **DADURCH GEKENNZEICHNET, dass** das Vorwärmen des Rohmaterials in Stufe (c) innerhalb eines Temperaturbereichs von 140° C bis 200° C, vorzugsweise von 150° C bis 180° C durchgeführt wird.

15. Verfahren zur Wärmebehandlung von Altreifen nach einem der Ansprüche 1 bis 11, **DADURCH GEKENNZEICHNET, dass** die Gase an das erste Gasanschlussrohr (15) in Richtung einer Zwischenzone des Reaktors (1) oder einer Thermolysereaktionszone abgegeben werden, die eine Temperatur zwischen 280 bis 300° C aufweisen.

16. Verfahren zur Wärmebehandlung von Altreifen nach einem der Ansprüche 1 bis 11, **DADURCH GEKENNZEICHNET, dass** der Thermolyseprozess von Stufe (e) bei einer Temperatur zwischen 400° C bis 550° C und vorzugsweise zwischen 420° C bis 450° C durchgeführt wird.

17. Verfahren zur Wärmebehandlung von Altreifen nach einem der Ansprüche 1 bis 11, **DADURCH GEKENNZEICHNET, dass** die Abgabe von Abgasen aus dem ICE (4) aus dem Vorwärmmechanismus an die Kühlzone des Reaktors (1) bei einer Temperatur innerhalb eines Bereichs von 50° C bis 110° C und vorzugsweise von 60° C bis 80°C durchgeführt wird.

18. Anlage zur Wärmebehandlung von Altreifen, das auf dem Vorwärmen des zuvor zermahlenen Rohmaterials innerhalb eines Zuführmechanismus des Reaktors basiert, der ermöglicht, den Wirkungsgrad der Wärmebehandlung durch die Verringerung des Energieverbrauchs zu erhöhen, **dadurch GEKENNZEICHNET, dass** diese umfasst:
einen luftdichten vertikaler Reaktor (1) mit einer Reaktionszone und einer Kühlzone des festen Thermolyseabfalls, der eine Zuführluftschleuse (10) von zuvor zermahlenen Altreifen, die über dem Reaktor (1) angeordnet ist, eine Auslassluftschleuse (28) des festen Thermolyseabfalls, die unter dem Reaktor (1) angeordnet ist, ein erstes Anschlussrohr zum Eintreten von Gasen (15), das in dem Zwischenteil des Reaktors (1) angeordnet ist, einen Thermolysegasauslass (6), der in dem oberen Teil des Reaktors (1) angeordnet ist, und ein zweites Gaszufuhrrohr (23), das im unteren Teil angeordnet ist, aufweist, wobei die Kühlzone des festen Thermolyseabfalls
ein Zuführmechanismus (2) von zuvor zermahlenen Altreifen ist, der im oberen Teil des Reaktors (1) über der Zufuhrluftschleuse (10) angeordnet ist, die einen Gaseinlass (19) zum Vorerwärmen der zuvor zermahlenen Altreifen und einen Gasauslass (20) aufweist, wobei der Gasauslass (20) aufweist: einen ersten Leiter (21), der mit dem zweiten Gaszufuhrrohr (23) verbunden ist, das im unteren Teil oder der Kühlzone des Reaktors (1) angeordnet ist, um die festen Thermolyseprodukte zu kühlen, und b) ein zweites Rohr (24) zum Rückführen der Vorwärmgase in Richtung desselben Zuführmechanismus (2);
eine Aufnahmeeinrichtung für feste Thermolyseprodukte (3), die unter der Auslassluftschleuse (28) angeordnet ist, die durch eine Luftschleusenzufuhr (29) mit einem Magnetabscheider (30) verbunden ist, der einen ersten Auslass in Richtung eines Aufnahmetrichters für Metallprodukte (31) und einen zweiten Auslass in Richtung eines Trichters für feste Kohlenwasserstoffprodukte (32) aufweist;
einen Mechanismus zur Verwendung von Thermolysegasen (5) vom Typ einer Heizvorrichtung für die kombinierte Energiegewinnung, der mit dem Ableitungssystem von Verbrennungsgasen (33) verbunden ist;
einen Verbrennungsmotor (im Folgenden ICE) (4) des Ottomotortyps, wobei der ICE (4) den Kraftstoff verbraucht, der durch die Energiequelle (34) abgegeben wird, wobei der ICE (4) Gase erzeugt, die an das erste Anschlussrohr zum Eintreten der Gase (15) des Reaktors (1) und an den Gaseinlass (19) eines Zuführmechanismus (2) des Reaktors (1) abgegeben werden;
einen Zugmechanismus (22), der mit dem Gasauslass (20) des Zuführmechanismus (2) des Reaktors (1) verbunden ist, der die Auslassgase durch ein Rohr (24) in Richtung des Zuführmechanismus (2) zum Erzeugen einer Rückführung und in Richtung des Kühlgaseinlasses des Reaktors (1) durch einen Leiter (21) schickt;
eine erste Ejektorvorrichtung zum Herstellen von Heißgasen (18), die mit dem ICE (4) und dem Zugmechanismus (22) verbunden sind, welche die Gase herstellt, um sie in den Gaseinlass (19) des Zuführmechanismus (2) einzuleiten; und
eine zweite Ejektorvorrichtung zum Herstellen von Heißgasen (14), die mit dem ICE (4) und den Thermolysegasauslass (6) des Reaktors (1) verbunden sind, welche die Gase herstellt, um sie in das erste Anschlussrohr für Gase einzuleiten, die in den Reaktor (1) eintreten sollen (15).

19. Anlage zur Wärmebehandlung von Altreifen nach Anspruch 11, **DADURCH GEKENNZEICHNET, dass** der Zuführmechanismus des Reaktors (2) in Form eines geschlossenen Fördersystems hergestellt werden kann, wobei die Vorwärmfunktion von Rohmaterial darin enthalten ist, die mit dem Reaktor (1) durch die Luftschleuse (10) verbunden ist, wobei der geschlossene Förderer (2) durch die Luftschleuse (36) verbunden ist, die wiederum mit dem Aufnahmetrichter (38) verbunden ist, der durch einen Förderer (37) mit zermahlenen Reifen versorgt wird.

20. Anlage zur Wärmebehandlung von Altreifen nach Anspruch 11, **DADURCH GEKENNZEICHNET, dass** die Anlage zusätzlich mit einem Ejektorbrenner (40) bereitgestellt sein kann, der mit dem ersten Gaszufuhrrohr (15) des Reaktors (1) verbunden ist.

21. Anlage zur Wärmebehandlung von Altreifen nach Anspruch 12, **DADURCH GEKENNZEICHNET, dass** der Ejektorbrenner (40) vom Ejektortyp mit einem Luftzufuhrmechanismus (41) bereitgestellt ist und damit verbunden ist und auch mittels des Rohrs (42) mit dem Thermolysegasauslass (6) des Reaktors (1) verbunden ist.

## Revendications

1. Procédé de traitement thermique de pneumatiques usagés consistant à préchauffer le matériau brut préalablement broyé dans un mécanisme d'alimentation du réacteur qui permet d'augmenter l'efficacité du traitement thermique à travers la réduction de la consommation d'énergie au moyen de l'utilisation d'énergie résiduelle ledit procédé étant **caractérisé en ce qu'**il comprend les étapes suivantes :
a) fournir lesdits pneumatiques usagés préalablement broyés à un convoyeur (37),
(b) alimenter lesdits pneumatiques usagés préalablement broyés dudit convoyeur (37) à un mécanisme d'alimentation (2) situé sur un réacteur (1) ;
(c) préchauffer les pneumatiques usagés préalablement broyés situés à l'intérieur dudit mécanisme d'alimentation (2) ayant un premier flux de premiers gaz d'échappement provenant d'un Moteur à Combustion Interne (ci-après MCI) (4) ;
(d) alimenter lesdits pneumatiques usagés préalablement broyés et chauffés de l'intérieur dudit mécanisme d'alimentation (2) audit réacteur (1),
(e) fournir un deuxième flux de gaz d'échappement provenant dudit MCI (4) à travers un premier tube de raccordement des gaz (15) situé dans la zone intermédiaire dudit réacteur (1) ou zone de thermolyse de réaction, créant dans ledit réacteur (1) un environnement exempt d'oxygène, générant ainsi avec ladite réaction de thermolyse un flux de gaz de thermolyse sortant du réacteur (1) à travers une sortie (6) et un volume de produits solides de thermolyse qui tombent vers la plus petite portion dudit réacteur (1) ;
(f) faire recirculer les gaz utilisés dans l'étape (c) où les pneumatiques usagés broyés préalablement préchauffés sont préchauffés de l'intérieur dudit mécanisme d'alimentation (2) vers un tube d'entrée (23) situé dans une zone de refroidissement inférieure de réacteur (1) pour refroidir les produits solides de thermolyse obtenus dans l'étape (e) ;
(g) décharger les produits solides de thermolyse refroidis dans l'étape (f) comme le noir de carbone, les agrégats minéraux de pneumatiques ; un renforcement métallique et autres sortant de la partie inférieure du réacteur (1) à travers un sas alimentateur (28) vers des moyens pour recevoir les produits solides de thermolyse (3) ;
(h) délivrer les produits solides de thermolyse refroidis à travers un alimentateur de sas (29) vers un séparateur magnétique (30) pour recevoir les produits solides de thermolyse, le noir de carbone et autres du renforcement métallique ; et
(i) faire recirculer ledit flux de gaz de thermolyse sortant du réacteur (1) à travers une sortie (6) obtenu dans l'étape (e) vers ledit premier tube de raccordement des gaz (15) situé dans la zone intermédiaire dudit réacteur (1) ou zone de réaction thermolyse, réaliser un mélange dudit gaz et des gaz d'échappement du MCI au moyen d'un mécanisme éjecteur.

2. Procédé de traitement thermique de pneumatiques usagés selon la revendication 1 **CARACTÉRISÉ en ce que** lesdits gaz de thermolyse sortant par la sortie (6) de réacteur (1) dans l'étape (e) sont orientés à travers un tube (7) vers un mécanisme pour utiliser des gaz de thermolyse (5) afin de les utiliser et d'obtenir de l'énergie.

3. Procédé de traitement thermique de pneumatiques usagés selon la revendication 1 **CARACTÉRISÉ en ce que** ledit flux de gaz de thermolyse sortant par ladite sortie de gaz (6) de réacteur (1) est séparé en deux portions, dans lequel une première portion est orientée par un tube (26) à travers le compteur de consommation de gaz (27) pour sa recirculation dans ledit réacteur (1) à travers un premier dispositif éjecteur pour préparer des gaz chauds (14), et dans lequel une deuxième portion est orientée vers le mécanisme pour utiliser les gaz de thermolyse (5) au moyen d'un tube (7) à travers le compteur de consommation de gaz (8).

4. Procédé de traitement thermique de pneumatiques usagés selon les revendications 2 ou 3 **CARACTÉRISÉ en ce que** ledit mécanisme pour utiliser les gaz de thermolyse (5) est raccordé à un système de dérivation de gaz de combustion (33) de sorte que lesdits gaz puissent être utilisés dans une chaudière ou qu'ils puissent être envoyés vers le MCI (4).

5. Procédé de traitement thermique de pneumatiques usagés selon la revendication 1 **CARACTÉRISÉ en ce qu'**il comprend la recirculation des gaz utilisés dans l'étape (c) qui sont passés à travers le mécanisme d'alimentation (2) vers un deuxième dispositif éjecteur pour la préparation de gaz chauds (18), dans lequel dans ledit deuxième dispositif éjecteur pour la préparation de gaz chauds (18), lesdits gaz utilisés dans l'étape (c) sont mélangés avec le premier flux de gaz d'échappement du MCI (4) pour les faire recirculer vers la deuxième étape (c).

6. Procédé de traitement thermique de pneumatiques usagés selon la revendication 1 **CARACTÉRISÉ en ce que** les produits séparés dans l'étape (h) sont envoyés dudit séparateur magnétique (30) vers une trémie de réception de produits métalliques (31) et les hydrocarbures solides (noir de carbone) sont envoyés vers une trémie pour des produits solides d'hydrocarbure (32).

7. Procédé de traitement thermique de pneumatiques usagés selon la revendication 1 **CARACTÉRISÉ en ce que** dans ladite étape (b) les pneumatiques usagés préalablement broyés sont alimentés à travers un mécanisme d'alimentation du réacteur (2) qui comprend un système de convoyeur fermé avec la fonction de préchauffage de matériau brut incorporé à l'intérieur.

8. Procédé de traitement thermique de pneumatiques usagés selon la revendication 2 ou 3 **CARACTÉRISÉ en ce que** les gaz de l'étape (i) sont envoyés à un brûleur éjecteur (40) raccordé audit tube d'alimentation de gaz (15) de réacteur (1) à travers la soupape d'arrêt (39).

9. Procédé de traitement thermique de pneumatiques usagés selon la revendication 1 **CARACTÉRISÉ en ce qu'**au moins une fraction des gaz de thermolyse sortant du réacteur (1) par ladite sortie (6) est envoyée à un condensateur (44).

10. Procédé de traitement thermique de pneumatiques usagés selon la revendication 9 **CARACTÉRISÉ en ce que** lesdits gaz condensés dans le condensateur (44) sont stockés dans un accumulateur de fraction liquide (46) destinés à être traités, purifiés et fournis à un dispositif d'utilisation (5) pour leur combustion ou destinés à être délivrés aux consommateurs.

11. Procédé de traitement thermique de pneumatiques usagés selon la revendication 9 ou 10 **CARACTÉRISÉ en ce que** ladite étape de condensation est réalisée dans un circuit double où une première fraction liquide d'hydrocarbures lourds est réalisée dans un premier condensateur (44) et une deuxième fraction liquide d'hydrocarbures légers est réalisée dans un deuxième condensateur (49).

12. Procédé de traitement thermique de pneumatiques usagés selon l'une quelconque des revendications précédentes 1 à 11 **CARACTÉRISÉ en ce que** le rapport du poids des gaz d'échappement du MCI, qui sont utilisés pour créer l'environnement exempt d'oxygène au poids du matériau brut est dans la gamme de 0,4:1 à 0,7:1.

13. Procédé de traitement thermique de pneumatiques usagés selon l'une quelconque des revendications 1 à 11 **CARACTÉRISÉ en ce que** le rapport du poids des gaz de thermolyse fournis au mécanisme pour la préparation des gaz chauds au poids du matériau brut est entre 0,30: 1 à 0,45: 1.

14. Procédé de traitement thermique de pneumatiques usagés selon l'une quelconque des revendications 1 à 11 **CARACTÉRISÉ en ce que** le préchauffage du matériau brut dans l'étape (c) est réalisé dans une gamme de température de 140 °C à 200 °C, de préférence de 150 °C à 180 °C.

15. Procédé de traitement thermique de pneumatiques usagés selon l'une quelconque des revendications 1 à 11 **CARACTÉRISÉ en ce que** les gaz sont fournis audit premier tube de raccordement des gaz (15) vers la zone intermédiaire dudit réacteur (1) ou de la zone de réaction de thermolyse ayant une température entre 280-300 °C.

16. Procédé de traitement thermique de pneumatiques usagés selon l'une quelconque des revendications 1 à 11 **CARACTÉRISÉ en ce que** le procédé de thermolyse de l'étape (e) est réalisé à une température entre 400°C à 550°C et de préférence entre 420°C à 450°C.

17. Procédé de traitement thermique de pneumatiques usagés selon l'une quelconque des revendications 1 à 11 **CARACTÉRISÉ en ce que** la fourniture de gaz d'échappement du MCI (4) du mécanisme de préchauffage à la zone de refroidissement du réacteur (1) est réalisée à une température dans une gamme de 50°C à 110 °C et de préférence de 60 °C à 80 °C.

18. Installation de traitement thermique de pneumatiques usagés consistant à préchauffer le matériau brut préalablement broyé dans un mécanisme d'alimentation du réacteur qui permet d'augmenter l'efficacité du traitement thermique à travers la réduction de la consommation d'énergie **CARACTÉRISÉE en ce qu'**elle comprend :
un réacteur vertical hermétique (1) avec une zone de réaction et une zone de refroidissement des déchets de thermolyse solide ayant un sas d'alimentation (10) de pneumatiques usagés préalablement broyés, situés au-dessus dudit réacteur (1), un sas de déchargement (28) desdits déchets de thermolyse solides sous ledit réacteur (1), un premier tube de raccordement pour l'entrée des gaz (15) situé dans la portion intermédiaire dudit réacteur (1), une sortie de gaz de thermolyse (6) située dans la portion supérieure dudit réacteur (1) et un deuxième tube d'alimentation des gaz (23) situé dans la portion inférieure dans laquelle ladite zone de refroidissement des déchets de thermolyse solides se trouve ;
un mécanisme d'alimentation (2) de pneumatiques usagés préalablement broyés dans la portion supérieure dudit réacteur (1) au-dessus dudit sas d'alimentation (10) ayant une entrée de gaz (19) pour le préchauffage desdits pneumatiques usagés préalablement broyés et une sortie de gaz (20) où ladite sortie de gaz (20) a: un premier conducteur (21) raccordé audit deuxième tube d'alimentation des gaz (23) situé dans la portion inférieure ou la zone de refroidissement du réacteur (1) pour refroidir les produits solides de thermolyse et b) un deuxième tube (24) pour faire recirculer les gaz de préchauffage vers le même mécanisme d'alimentation (2) ;
des moyens de réception pour des produits solides de thermolyse (3) situés sous ledit sas de sortie (28) qui est raccordé à travers un alimentateur de sas (29) avec un séparateur magnétique (30) qui a une première sortie vers une trémie de réception pour des produits métalliques (31) et une deuxième sortie vers une trémie pour des produits solides d'hydrocarbure (32) ;
un mécanisme pour utiliser des gaz de thermolyse (5) étant du type appareil de chauffage pour l'exploitation combinée d'énergie, qui est raccordé au système de dérivation des gaz de combustion (33) ;
un moteur à combustion interne (ci-après MCI) (4) du type à cycle Otto, MCI (4) qui consomme du carburant fourni par la source d'énergie (34) dans lequel ledit MCI (4) génère des gaz destinés à être fournis au premier tube de raccordement pour l'entrée des gaz (15) du réacteur (1) et à l'entrée de gaz (19) d'un mécanisme d'alimentation (2) du réacteur (1) ;
un mécanisme de tirage (22) raccordé à la sortie de gaz (20) du mécanisme d'alimentation (2) du réacteur (1) qui envoie les gaz de sortie à travers un tube (24) vers ledit mécanisme d'alimentation (2) pour créer une recirculation et vers l'entrée de gaz de refroidissement du réacteur (1) à travers un conducteur (21) ;
un premier dispositif éjecteur pour préparer des gaz chauds (18) raccordé audit MCI (4) et audit mécanisme de tirage (22) qui prépare les gaz pour les introduire dans ladite entrée de gaz (19) du mécanisme d'alimentation (2) ; et
un deuxième dispositif éjecteur pour la préparation de gaz chauds (14) raccordé audit MCI (4) et à ladite sortie de gaz de thermolyse (6) dudit réacteur (1) qui prépare les gaz pour les introduire dans ledit premier tube de raccordement pour l'entrée des gaz (15) dudit réacteur (1).

19. Installation de traitement thermique de pneumatiques usagés selon la revendication 11 **CARACTÉRISÉE en ce que** ledit mécanisme d'alimentation du réacteur (2) peut être fait sous la forme d'un système de convoyeur fermé avec la fonction de préchauffage de matériau brut incorporé à l'intérieur, raccordé au réacteur (1) à travers l'alimentateur de sas (10) ledit transporteur fermé (2) étant raccordé à travers l'alimentateur de sas (36) qui à son tour est raccordé à la trémie de réception (38) qui est alimentée par un convoyeur (37) avec des pneumatiques broyés.

20. Installation de traitement thermique de pneumatiques usagés selon la revendication 11 **CARACTÉRISÉE en ce que** ladite installation peut être en outre pourvue d'un brûleur du type éjecteur (40) raccordé audit premier tube d'alimentation de gaz (15) du réacteur (1).

21. Installation de traitement thermique de pneumatiques usagés selon la revendication 12 CARACTÉRISÉE en ce ledit brûleur du type éjecteur (40) est pourvu de et raccordé à un mécanisme d'approvisionnement en air (41) et est également raccordé au moyen du tube (42) à ladite sortie de gaz de thermolyse (6) dudit réacteur (1).
